# EUROPEAN PATENT APPLICATION

(11) **EP 1 262 097 A2**
(43) Date of publication of application: **04.12.2002**
(21) Application number: 02394069.5
(22) Date of filing: 30.05.2002
(51) Int. Cl.: A01D 34/86

(54) **Verge trimming apparatus**

(30) Priority: 01.06.2001 IE 20010525; 01.10.2001 IE 20010868
(71) Applicant: Harrington, Declan, Macroom, County Cork (IE)
(72) Inventor: Harrington, Declan, Macroom, County Cork (IE)
(74) Representative: O'Connor, Donal Henry

(57) **Abstract**

A verge trimming apparatus includes a tractor vehicle (1). An articulated boom (3) is mounted on a chassis (2) of the vehicle (1) and projects outwardly from one side of the vehicle (1). A set of three flail heads (5, 6, 7) are mounted at an outer end of the boom (3). These flail heads (5, 6, 7) are both slidable and pivotable relative to each other for arrangement in a number of hedge and/or verge trimming configurations.

## Description

### Introduction

This invention relates to a verge trimming apparatus and in particular to vehicles incorporating a cutting attachment for hedge and verge trimming.

It is well known to provide a hedge or verge trimming cutting attachment for mounting on the three-point linkage of a tractor. The attachment essentially comprises a boom on the end of which is mounted a cutter such as a flail head for cutting the hedge or verge. In use, typically two or three passes are required by the vehicle to trim hedges, for example. On a first pass, the flail head is arranged in a vertical orientation for cutting a side of the hedge and in a second pass, the flail head is arranged in a horizontal orientation for cutting the top of the hedge. A third pass may also be required to cut the verge adjacent the hedge. It will be appreciated that this is relatively time consuming and there is also the problem associated with obstruction of traffic on the road while the hedge is being trimmed.

When the verge trimming attachment is mounted at a rear end of a tractor the large rear wheel of the tractor obstructs the view of the driver. Even when mounted at a front end of the vehicle the driver's or operator's view of the cutter head may be partially obstructed by the engine housing for example.

The present invention is directed towards overcoming these problems.

### Statements of Invention

According to the invention there is provided a verge trimming apparatus comprising a cutter assembly for mounting on a support having means for attachment to a tractor vehicle, characterised in that the cutter assembly includes at least two cutters which are slidably interconnected for sliding movement of the cutters relative to each other.

In a particularly preferred embodiment of the invention the cutters are both slidable and rotatable relative to each other.

In one embodiment of the invention the cutters are slidably interconnected and have slide actuating means for sliding movement of the cutters relative to each other. Preferably the cutters are axially slidable.

In another embodiment the cutter assembly includes a primary cutter and at least one secondary cutter, the primary cutter and the or each secondary cutter being interconnected by at two-part primary slide mechanism comprising a slide rail and a complementary slide shoe which is slidable along the rail, one part being mounted on the primary cutter and the other part being mounted on the secondary cutter. Preferably the slide rail is attached to the primary cutter and the secondary cutter is attached to the slide shoe.

In another embodiment the secondary cutter is slidable relative to the primary slide mechanism. Preferably the secondary cutter has a slide bar and an associated slide collar which is slidably mounted on the slide bar, one of the bar and the collar being attached to the primary slide mechanism on the primary cutter and the other of the bar and the collar being attached to the secondary cutter.

In a particularly preferred embodiment the slide bar is attached to the secondary cutter and the slide collar is attached to the slide shoe on the primary cutter.

In a further embodiment the secondary cutter is rotatable relative to the primary slide mechanism. Conveniently the slide collar of the secondary cutter is pivotally connected to the slide shoe on the primary cutter.

In another embodiment actuating means is provided for controlled movement of the cutters relative to each other. Preferably the actuating means is ram means connected to an hydraulic power supply and regulated by a controller for manipulation and movement of the cutters relative to each other.

In another embodiment the apparatus includes a mounting frame having means for pivotal attachment to the support, the primary cutter being rigidly attached to the mounting frame and at least one secondary cutter being mounted on the mounting frame for movement relative to the primary cutter.

In another embodiment the or each secondary cutter is pivotally connected to its associated slide shoe and pivot actuating means is mounted between the secondary cutter and its associated slide shoe.

In a further embodiment the cutters are pivotally interconnected and have pivot actuating means for pivotal movement of the cutters relative to each other. Preferably each cutter is pivotal about an axis which is substantially perpendicular to a longitudinal axis of the cutter.

In another embodiment a mounting frame is pivotally mounted on the boom, a primary cutter is rigidly attached to the mounting frame, and at least one secondary cutter is mounted on the mounting frame for movement relative to the primary cutter.

In a further embodiment the mounting frame has a slide rail, the or each secondary cutter being mounted on an associated slide shoe which is slidable along said slide rail, slide actuating means being provided between the slide shoe and the mounting frame, said slide actuating means being operable to slide the shoe along the slide rail.

In another embodiment the or each secondary cutter is pivotally connected to its associated slide shoe, and pivot actuating means is mounted between the secondary cutter and the mounting frame.

In a further embodiment the or each secondary cutter has a slide bar, a slide collar being slidably mounted on the slide bar, collar slide operating means being mounted between the secondary cutter and the slide collar for sliding the slide collar along the slide bar, the slide collar being pivotally mounted on the associated slide shoe on the mounting frame.

In another embodiment the slide collar and the slide shoe are pivotally interconnected by a pivot pin on one of the collar and the shoe which is pivotally journalled within a complementary bushing on the other of the collar and the shoe and a pivot linkage includes a first pivot arm having an inner end pivotally connected to one of the collar and the shoe and an outer end connected to means for pivoting said first pivot arm about the pivot at its inner end, a second pivot arm having an inner end pivotally connected to the other of the collar and the shoe and an outer end pivotally connected intermediate the ends of the first pivot arm.

In another aspect the invention provides a verge trimming vehicle comprising a tractor vehicle upon which the verge trimming apparatus is mounted by means of an articulated boom.

In a preferred embodiment the boom is attached centrally on a chassis of the tractor vehicle. Preferably the boom is mounted offset from a longitudinal centreline of the vehicle.

In another embodiment actuating means is provided for moving the cutters on the support and associated control means to regulate operation of the actuating means. Conveniently said control means includes hand and/or foot operated controls on the vehicle which would usually be mounted in the cab of the vehicle at the driving position.

In a further embodiment the control means includes a joystick for manipulation of the support boom on the tractor vehicle and for controlling rotation of the first flail head at an outer end of the support boom, a first foot pedal for controlling rotation of a second flail head relative to the first flail head and for controlling sliding movement of the second flail head, and a second foot pedal for controlling rotation of a third flail head relative to the first flail head and for controlling sliding movement of the third flail head.

### Detailed Description of the Invention

The invention will be more clearly understood by the following description of some embodiments thereof, given by way of example only, with reference to the accompanying drawings, in which:-
Fig. 1 is a front elevational view of a verge trimming vehicle according to the invention;
Fig. 2 is a side elevational view showing a left-hand side of the vehicle;
Fig. 3 is a side elevational view showing a right-hand side of the vehicle;
Fig. 4 is a plan view of the vehicle;
Fig. 5 is an enlarged detail exploded perspective view of a cutter head arrangement used in the vehicle;
Fig. 6 is a detail perspective view showing the cutter head arrangement;
Fig. 7 is a detail perspective view illustrating a pivot mount for one of the cutter heads;
Fig. 8 is an enlarged detail perspective view of the pivot mount;
Fig. 9 is an enlarged side elevational view similar to Fig. 3 showing a right hand side of the vehicle;
Fig. 10 shows a number of different arrangements for the cutter head in which flail heads are arranged in different orientations;
Fig. 11 is a detail elevational view of portion of a cutting attachment according to another embodiment of the invention; and
Fig. 12 is an elevational view of a cutting attachment according to a further embodiment of the invention mounted on a tractor vehicle.

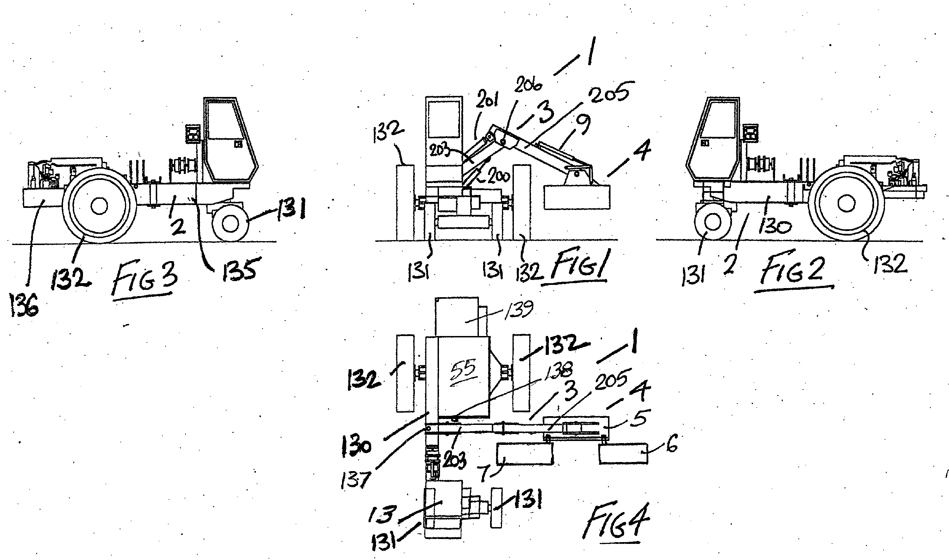

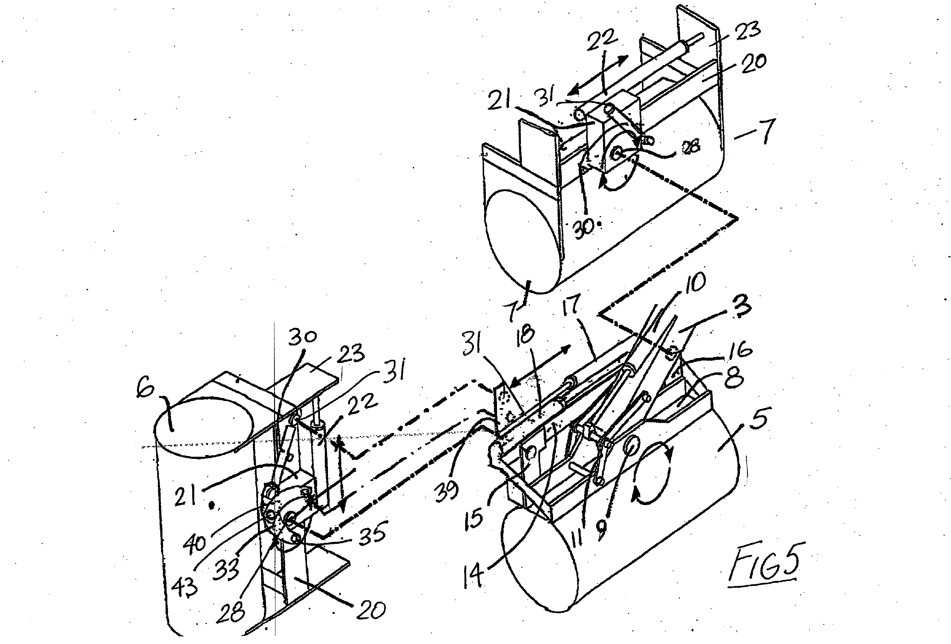

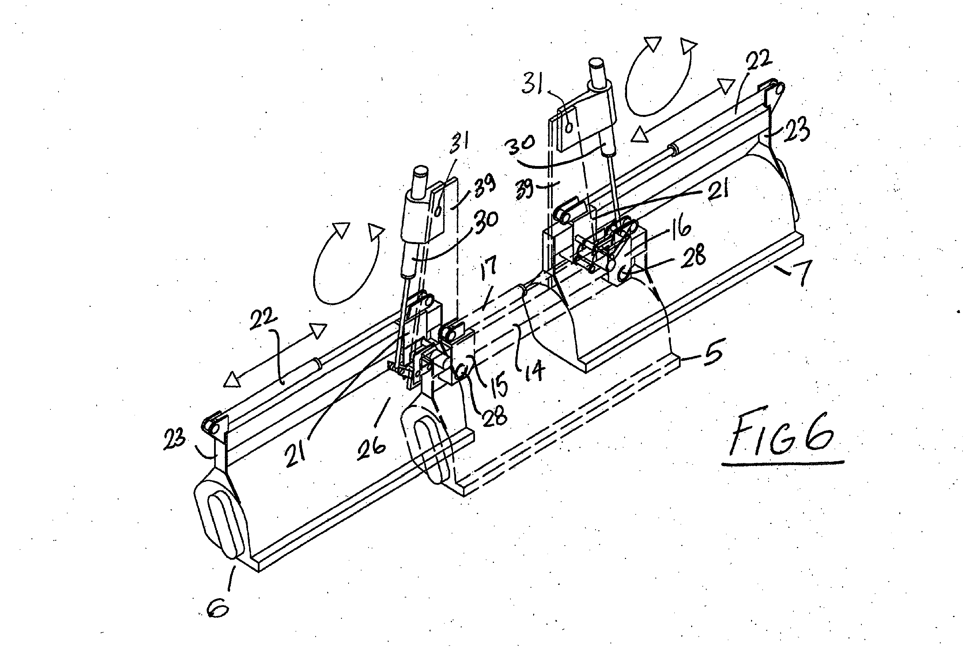

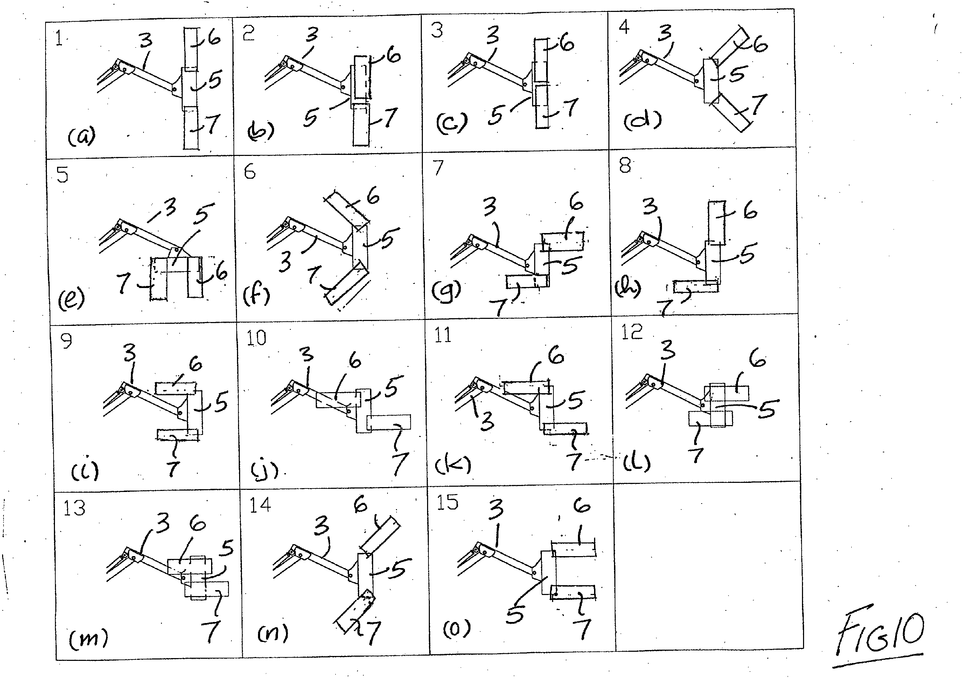

Referring to the drawings, and initially to Figs. 1 to 10 thereof, there is illustrated a verge trimming vehicle according to the invention, indicated generally by the reference numeral 1. The vehicle 1 is a tractor vehicle having a wheeled chassis 2 carrying a support formed by a boom 3 at an end of which is mounted an adjustable cutter head assembly indicated generally by the reference numeral 4 with three articulated cutters formed by flail heads, 5, 6, 7 which are shown in more detail in Fig. 5. These flail heads 5, 6, 7 are movable relative to each other between a number of different cutting configurations, some of which are schematically illustrated in Fig. 10. Referring in particular to Figs. 5 to 8, a mounting frame 8 is pivotally mounted at an outer end of the boom 3 by means of a pivot pin 9. A ram 10 is operable through a linkage 11 to pivot the frame 8 about the pivot pin 9, the ram 10 being mounted between the boom 3 and the linkage 11.

Mounted on the frame 8 is a primary or first flail head 5 which may be of any suitable construction, essentially comprising a rotatable shaft carrying a plurality of flails with an hydraulic drive motor for rotation of the shaft. The flail head 5 is pivotable with the frame 8 about pivot pin 9.

The mounting frame 8 has a box section beam forming a slide rail 14. Slide shoes 15, 16 associated with secondary flail heads 6, 7 are slidable along the slide rail 14 and have a rectangular opening for through passage of the rail 14. Rams 17, 18 extend between each slide shoe 15, 16 and the mounting frame 8 and are operable to slide the slide shoes 15, 16 along the slide rail 14.

Secondary fail heads, namely a second flail head 6 and a third flail head 7 are slidably and pivotally mounted on the mounting frame 8 in front of the flail head 5. The second flail head 6 and third flail head 7 are of similar construction and are mounted on the mounting frame 8 in similar fashion. Like parts of these flail head assemblies 6, 7 are assigned the same reference numerals.

The second flail head 6 has a longitudinal slide bar 20. A complementary slide collar 21 is slidably moveable along the slide bar 20. A ram 22 is mounted between the slide collar 21 and a bracket 23 at one end of the slide bar 20 to slide the collar 21 along the slide bar 20.

Each slide collar 21 is pivotally mounted on its associated slide shoe 15, 16 by means of a pivot assembly indicated generally by the reference numeral 26. The pivot assembly 26 comprises a cylindrical bushing 27 attached to the slide collar 21 which is pivotally mounted about a pivot pin 28 which is fixed to the slide shoe 15, 16.

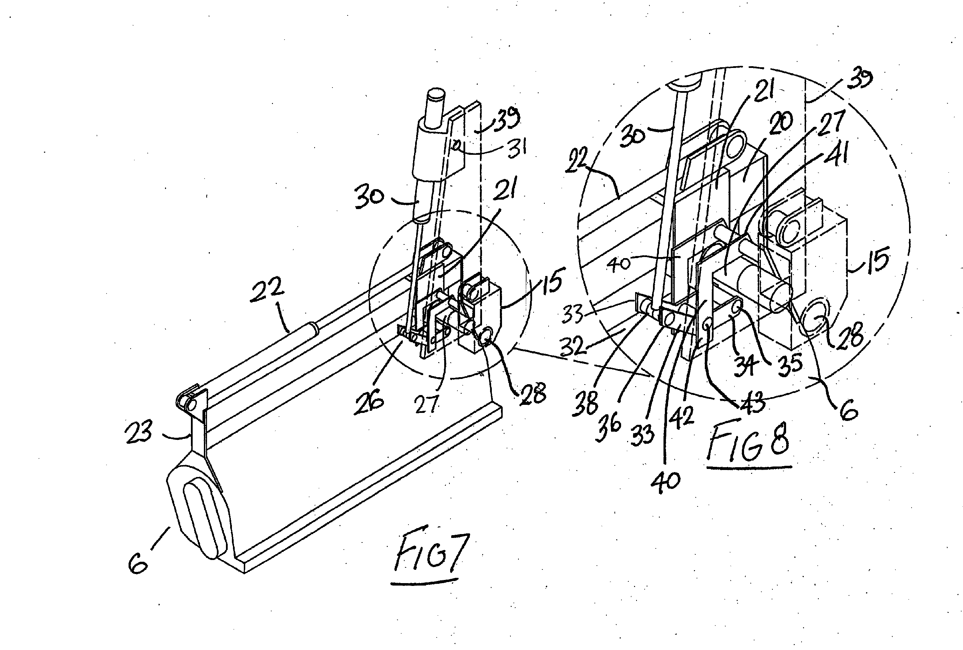

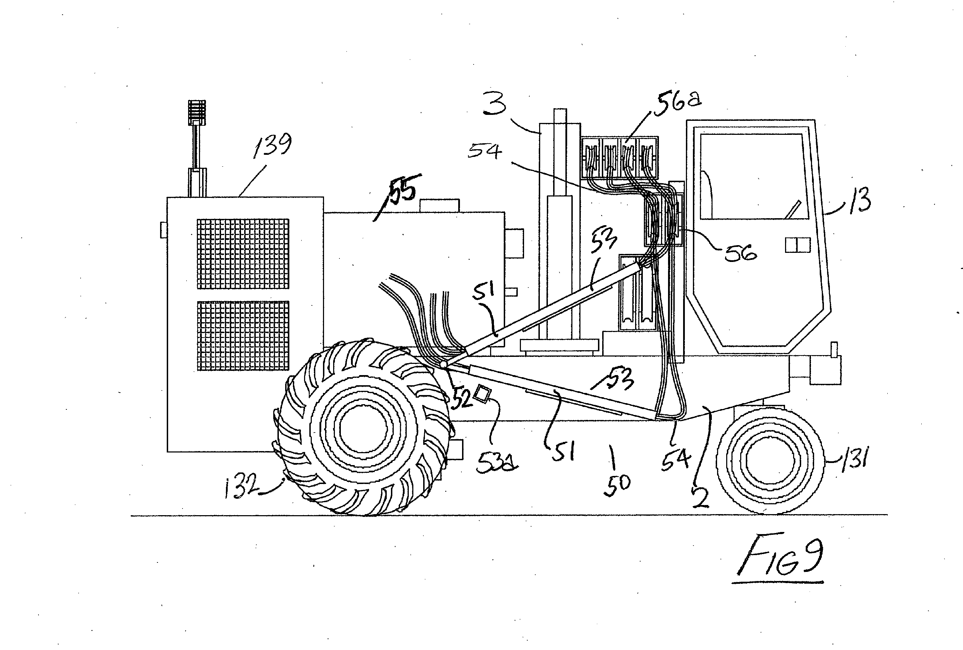

Referring in particular to Figs. 7 and 8, a ram 30 is operable to rotate the slide shoe 15 on the mounting frame 8 and the slide collar 21 on the flail head 6 relative to each other. A pivot linkage indicated generally by the reference numeral 32, includes a first cranked pivot arm 33 having an inner end 34 pivotally connected by a pivot pin 35 to the slide collar 21. An outer end 36 of the first pivot arm 33 is connected to the ram 30 by a pivot connector 38. The other end of the ram 30 is pivotally attached by pivot 31 to a mounting bracket 39 on the slide shoe 15, 16. The ram 30 is operable to pivot the first pivot arm 33 about pivot pin 35. A second pivot arm 40 has an inner end 41 pivotally connected to the slide shoe 15 and an outer end 42 pivotally connected by a pivot pin 43 intermediate the ends of the first pivot arm 33. Thus the rams 30 are operable to independently pivot the second flail head 6 and third flail head 7 through about 200° between an upright outwardly facing position which is generally perpendicular to the first flail head 5 (see flail head 6 in Fig. 5) through an intermediate downwardly facing position which is substantially inline with the first flail head 5 (see flail head 7 in Fig. 5) and a downwardly extending inwardly facing position again generally perpendicular to the first flail head 5.

The third flail head 7 is mounted in similar fashion on the mounting frame 8 and is also pivotal through approximately 200° as well as being longitudinally slidable.

It will be appreciated that the first flail head 5 can be pivoted on the boom 3 by means of the ram 10 and each of the second flail heads 6, 7 can be independently pivoted relative to the first flail head 5 and can be extended and retracted in a wide variety of planes as required. Thus, various configurations of the three flail heads 5, 6, 7 are possible as shown in Fig. 10. For example, the flail heads 5, 6, 7 may be arranged in alignment (a-c) or alternatively, the secondary flail heads 6, 7 may be orientated at an angle to the first flail head 5 to cut various hedge configurations and/or verges. Figure 10e shows a configuration for cutting both sides and top of the hedge at the same time, the flail heads 5, 6, 7 being arranged in an inverted U formation.

It will be appreciated that the articulation of the flail heads 5, 6, 7 on the boom 3 gives a great versatility for cutting various hedge and/or verge configurations in a single pass.

Referring particularly to Fig, 4 it can be seen that the articulated boom 3 is centrally mounted on the chassis 2 of the vehicle 1. Also, the chassis member on which the boom 3 is mounted is offset from a centre line of the vehicle to provide additional stability when the boom 3 is attached to the vehicle 1. It will also be noted that a cab 13 of the vehicle is positioned on the chassis 2 immediately in front of the boom 3 such that the driver/operator has a good view of the cutter 4 during operation of the cutter 4. The cab 13 is offset from the centreline of the vehicle affording a good view of the cutter head assembly 4.

It will be appreciated that the cutter 4 according to the invention has an advantage over conventional single flail cutters which usually are unable to cover all the angles and heights required for trimming a hedge in a single pass. The cutter 4 of the present invention has a plurality of flail heads 5, 6, 7 which can be independently pivoted relative to each other and on the support boom 3 to cut several angles or faces of the hedge simultaneously and can also be extended inwardly and outwardly to match the height of the hedge or width of verge being trimmed. It will also be noted that-because of the versatility of the cutter 4 a simplified boom construction can be provided as the manipulation of the flail heads 5, 6, 7 gives the reach and angles required for cutting hedges/verges.

A break away system would normally be fitted to the vehicle 1 such that for example when excess pressure comes on the boom 3 pivoting point hydraulic drive the transmission will disengage and wheel brakes can also be engaged automatically if extra vehicle stopping power is required. The boom 3 is mounted on the chassis 2 at an inner end of the boom 3 by a vertical pivot pin 137. A resilient mount at the pivot pin 137 maintains the boom 3 in a normally sideways extending position substantially perpendicular to the longitudinal beam 130 of the chassis 2 as shown. However this resilient mount also allows the boom 3 to deflect rearwardly somewhat, if the flail heads 5, 6, 7 meet an obstruction for example. A drive trip switch 138 (Fig. 4) may be mounted on the chassis 2 such that if the boom 3 deflects rearwardly it will hit the switch 138 to cut out the vehicle drive to stop the vehicle.

It will further be noted that the offset chassis arrangement incorporating a recess allows the boom 3 to swing the cutter 4 close in to the vehicle for operation along relatively narrow roads.

If added stability is required then provision may be provided on the chassis 2 for the addition of counterbalance weights which can be readily easy and quickly mounted on or removed from the chassis 2 at any suitable location.

The chassis 2 has a longitudinal beam 130 of hollow box-section material upon which axles carrying the front wheels 131 and rear wheels 132 are mounted. It will be noted that small front wheels 131 are provided and these are below the cab 13 so as not to obstruct the view of the cutter assembly 4 from the cab 13. The chassis 2 may be provided with pockets or hangers by which counterbalance weights may be removably mounted in the chassis 2. Alternatively, if required the counterbalance weights could be fixed on the chassis 2. Conveniently the counterbalance weights can be provided at mounting points 135, 136 adjacent a front end and a rear end of the chassis 2 respectively, although any other suitable mounting locations on the chassis 2 may be chosen.

A hydrostatic drive for the vehicle may be provided with a simple forward/rearward drive arrangement controlled by an accelerator pedal mounted on a floor of the cab. Release of the accelerator pedal disengages power supply to the wheels which lock, stopping the vehicle.

An hydraulic power supply 55 which in turn is powered by an internal combustion engine 139 is provided for operation of the boom 3 and the adjustable cutter assembly 4. Each flail head 5, 6, 7 is rotated by means of an hydraulic motor. The rams for controlling the positioning and orientation of the flail heads 5, 6, 7 can conveniently be operatively connected to a joystick controller and/or foot pedals in the cab with switches being provided associated with each ram so that a ram can be selected by the operation of the associated switch and then controlled by the joystick and/or foot pedals. The switches associated with the rams can be provided on the joystick, on the steering wheel of the vehicle or at any other convenient location within the cab.

Referring in particular to Fig. 1 and Fig. 5 a control system for regulating operation of the three flail heads 5, 6, 7 will be described. Suitable controls such as spool valves may be provided to independently control the flow of hydraulic fluid to the operating rams for each flail head 5, 6, 7 thus allowing independent manipulation and orientation of the flail heads 5, 6, 7 on the boom 3. A first controller may be provided by a joystick mounted in the vehicle cab which provides for operation of the boom 3 by means of ram 200 which is operable to raise and lower an inner leg 203 of the boom 4 and ram 201 which is operable to pivot an outer leg 205 of the boom 3 about pivot 206 at an outer end of the inner leg 203 of the boom 3. The joystick is also operable to regulate operation of ram 9 for swivelling the mounting frame 8 with the first flail head 5 at an outer end of the boom 3.

A second controller may be operated by a first foot pedal mounted in the vehicle cab, said first foot pedal being connected to a spool valve to regulate operation of ram 30 controlling pivoting of the second flail head 6 about pivot 28. The slide shoe control rams 17, 18 and both sliding collar rams 22 can also be adjusted by the second controller after selecting the desired ram 17, 18, 22 by means of a selector button or switch which can conveniently be provided on the joystick. Thus four selector buttons are provided on the joystick, one of the selector buttons being associated with each of the four rams 17, 18, 22.

A third controller may be operated by a second foot pedal mounted in the vehicle cab, said second foot pedal being connected to a spool valve to regulate operation of a ram 30 controlling pivoting of the third flail head 7 about pivot 28. The slide shoe control rams 17, 18 and both sliding collar rams 22 can also be adjusted by the third controller after selecting a desired ram 17, 18 by means of a selector button or switch which is provided on the joystick as previously described.

The vehicle braking system can be operated by means of a foot operated brake pedal located between the first and second foot pedals which control the rams. If the vehicle is of a hydrastatic type this brake pedal will be rarely used. The vehicle drive arrangement can be controlled by various push button controls on the steering knob or any convenient location on the steering wheel of the vehicle. One or more control buttons would engage the drive and the others would disengage the drive. Forward or reverse could be selected also by appropriate controls on the steering wheel or in any suitable location in the cab. Vehicle speed can be controlled by any of various different methods for example by controls on the steering wheel or at any convenient location in the cab. Conveniently drive and stop buttons for an hydraulic vehicle drive means are provided on a steering wheel in the vehicle cab. Forward, reverse and neutral drive switches are provided on the console adjacent the steering wheel in the cab. A speed controller is also provided on the console.

Referring in particular to Fig. 9, an hydraulic hose feed controller indicated generally by the reference numeral 50 is provided on the chassis 2. This comprises arms 51 which are pivotally mounted on the chassis 2 by a pivot 52. Each arm 51 carries a channel section tray 53 which receives and supports hydraulic hoses 54 which are led from the hydraulic power supply 55 through the tray 53 and up over first guide rollers 56 which are fixed to a bracket on the chassis 2 and then over second guide rollers 56a on the boom 3 for passage to the rams and/or motors of the cutter 4. As the boom 3 is raised and lowered and moved in and out to position the flail heads 5, 6, 7 the arms 51 reciprocate up and down to take up slack or pay out the hydraulic hoses 54 as required. This keeps the hydraulic hoses 54 neatly and prevents fouling of the hydraulic hoses 54. The trays 53 seat against a rest arm 53a on the chassis 2 when in a fully lowered position.

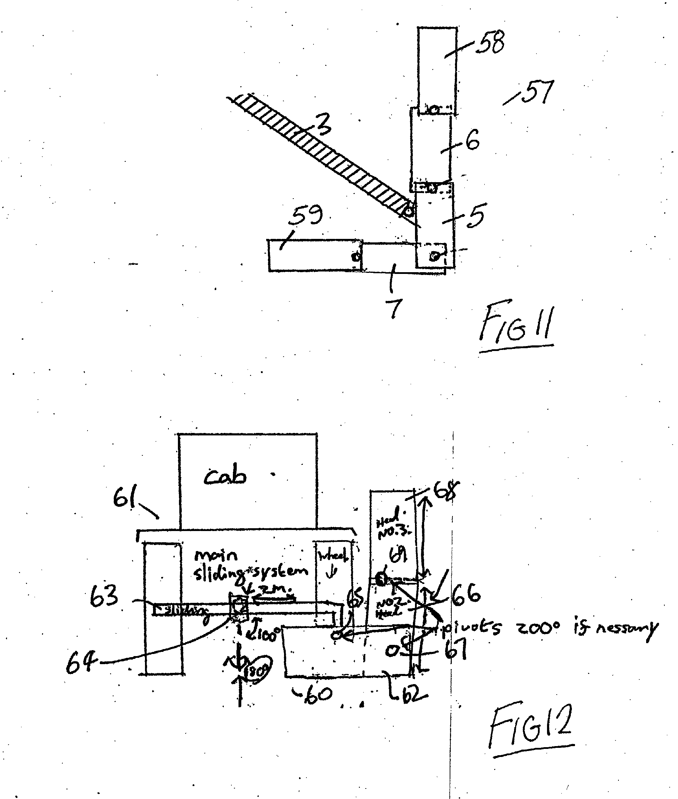

Referring now to Fig. 11, there is shown another cutter arrangement, indicated generally by the reference numeral 57. Parts similar to those described previously are assigned the same reference numerals. In this case, an additional two flail heads 58, 59 are provided which are pivotally mounted on the second flail head 6 and third flail head 7 respectively. This provides additional versatility in operation.

Referring now to Fig. 12, there is illustrated another cutting attachment, indicated generally by the reference numeral 60. Parts similar to those described previously are assigned the same reference numerals. In this case, a tractor vehicle 61 carries the attachment 60 at a rear of the vehicle. Instead of a boom, a sliding arm 63 is provided, the arm 63 being slidable in an associated mount 64 which optionally can swivel on the tractor vehicle 61. The first flail head 62 is pivotally mounted by a pivot 65 at an outer end of the arm 63. A second flail head 66 is mounted by a pivot 67 on the first flail head 12. A third flail 68 is pivotally mounted by a pivot 69 on the second flail head 66. In operation, the arm 63 can be slid in and out and rotated if necessary and the flail head 62, 66, 68 can be pivoted relative to each other into any desired cutting orientation as shown in Fig. 10.

The invention is not limited to the embodiments hereinbefore described which may be varied in both construction and detail within the scope of the appended claims.

## Claims

1. A verge trimming apparatus comprising a cutter assembly (4) for mounting on a support (3) having means for attachment to a tractor vehicle (1),
**characterised in that** the cutter assembly (4) includes at least two cutters (5, 6, 7) which are slidably interconnected for sliding movement of the cutters (5, 6, 7) relative to each other.

2. A verge trimming apparatus as claimed in claim 1 wherein the cutters (5, 6, 7) are both slidable and rotatable relative to each other.

3. A verge trimming apparatus as claimed in claim 1 or 2 wherein the cutters (6, 7) are axially slidable.

4. A verge trimming apparatus as claimed in any preceding claim wherein the cutter assembly (4) includes a primary cutter (5) and at least one secondary cutter (6, 7), the primary cutter (5) and the or each secondary cutter (6, 7) being interconnected by a two-part primary slide mechanism comprising a slide rail (14) and a complementary slide shoe (15, 16) which is slidable along the rail (14), one part (14, 15, 16) being mounted on the primary cutter (5) and the other part (14, 15, 16) being mounted on the secondary cutter (6, 7).

5. A verge trimming apparatus as claimed in claim 4 wherein the slide rail (14) is attached to the primary cutter (5) and the secondary cutter (6, 7) is attached to the slide shoe (15, 16).

6. A verge trimming apparatus as claimed in claim 4 or claim 5 wherein the secondary cutter (6, 7) is slidable relative to the primary slide mechanism (14, 15, 16).

7. A verge trimming apparatus as claimed in claim 6 wherein the secondary cutter (6, 7) has a slide bar (20) and an associated slide collar (21) which is slidably mounted on the slide bar (20), one of the bar (20) and the collar (21) being attached to the primary slide mechanism (15, 16) on the primary cutter (5) and the other of the bar (20) and the collar (21) being attached to the secondary cutter (6, 7).

8. A verge trimming apparatus as claimed in claim 7 wherein the slide bar (20) is attached to the secondary cutter (6, 7) and the slide collar (21) is attached to the slide shoe (15, 16) on the primary cutter (5).

9. A verge trimming apparatus as claimed in any preceding claim wherein the cutters (5, 6, 7) are pivotally interconnected and have pivot actuating means (30) for pivotal movement of the cutters (5, 6, 7) relative to each other.

10. A verge trimming apparatus as claimed in claim 9 wherein each cutter (5, 6, 7) is pivotal about an axis which is substantially perpendicular to a longitudinal axis of the cutter (5, 6, 7).

11. A verge trimming apparatus as claimed in any of claims 4 to 10 wherein the secondary cutter (6, 7) is rotatable relative to the primary slide mechanism (15, 16).

12. A verge trimming apparatus as claimed in claim 11 wherein the slide collar (21) of the secondary cutter (6, 7) is pivotally connected to the slide shoe (15, 16) on the primary cutter (5).

13. A verge trimming apparatus as claimed in any preceding claim wherein actuating means (17, 18, 22, 30) is provided for controlled movement of the cutters (5, 6, 7) relative to each other.

14. A verge trimming apparatus as claimed in any preceding claim including a mounting frame (8) having means for pivotal attachment to the support (3),
the primary cutter (5) is rigidly attached to the mounting frame (8),
at least one secondary cutter (6, 7) is mounted on the mounting frame (8) for movement relative to the primary cutter (5).

15. A verge trimming apparatus as claimed in any preceding claim wherein the or each secondary cutter (6, 7) is pivotally connected to its associated slide shoe (15, 16), and pivot actuating means (30) is mounted between the secondary cutter (6, 7) and its associated slide shoe (15, 16).

16. A verge trimming apparatus as claimed in any preceding claim wherein the slide collar (21) the slide shoe (15, 16) are pivotally interconnected by a pivot pin (28) on one of the collar (21) and the shoe (15, 16) which is pivotally journalled within a complementary bushing (27) on the other of the collar (21) and the shoe (15, 16) and a pivot linkage (32) includes a first pivot arm (33) having an inner end (34) pivotally connected to one of the collar (21) and the shoe (15, 16) and an outer end (36) connected to means (30) for pivoting said first pivot arm (33) about the pivot (35) at its inner end (34), a second pivot arm (40) having an inner end (41) pivotally connected to the other of the collar (21) and the shoe (15, 16) and an outer end (42) pivotally connected intermediate the ends of the first pivot arm (33).

17. A verge trimming apparatus as claimed in any preceding claim in combination with a tractor vehicle (1) upon which the verge trimming apparatus is mounted by means of an articulated boom (3).
